# EUROPEAN PATENT APPLICATION

(11) **EP 4 163 992 A1**
(43) Date of publication of application: **12.04.2023**
(21) Application number: 21948682.6
(22) Date of filing: 30.07.2021
(51) Int. Cl.: H01M 4/13, H01M 10/0525

(54) **BATTERY CELL, BATTERY, ELECTRIC DEVICE, AND METHOD AND DEVICE FOR MANUFACTURING BATTERY CELL**

(71) Applicant: Contemporary Amperex Technology Co., Limited, Ningde City, Fujian PRC 352100 (CN)
(72) Inventor: HE, Jianfu, Fujian 352100 (CN); YE, Yonghuang, Fujian 352100 (CN); LIU, Qian, Fujian 352100 (CN); SUN, Xueyang, Fujian 352100 (CN); ZHANG, Tao, Fujian 352100 (CN); JIN, Haizu, Fujian 352100 (CN)
(74) Representative: Gerauer, Marc Philippé
(86) International application number: PCT/CN2021/109908
(87) International publication number: WO 2023/004822

(57) **Abstract**

The present application provides a battery cell, a battery, a power consuming apparatus, and a method and apparatus for manufacturing a battery cell, and relates to the technical field of batteries. The battery cell includes a housing, an electrode assembly, and a first support member. The housing is provided with an accommodating cavity. The electrode assembly is accommodated in the accommodating cavity, and includes a main body portion and a thinned portion. At least one end of the main body portion in a first direction is connected to the thinned portion. The first support member is arranged corresponding to the thinned portion, and is configured to support the thinned portion when the electrode assembly is expanded. The first support member supports the thinned portion, so that the thinned portion can be in a stressed state with the support of the first support member, reducing the risk of rapid capacity decay and even thermal runaway caused by uneven polarization and therefore by the deposition of lithium ions and the formation of lithium dendrites during charging and discharging due to the fact that under conventional circumstances, the electrode plate has a smaller thickness at the thinned portion so that the thinned portion is not in contact with an inner wall of the housing or adjacent thinned portions are not in contact with each other and thus the thinned portion(s) cannot be stressed.

## Description

### Technical Field

The present application relates to the technical field of batteries, and in particular, relates to a battery cell, a battery, a power consuming apparatus, and a method and apparatus for manufacturing a battery cell.

### Background Art

At present, lithium ion batteries have become predominant products of secondary batteries because of their outstanding advantages such as high energy density and good cycling performance, and are widely used in fields such as portable electrical appliances, power vehicles, mobile phones, and spacecrafts.

People require lithium batteries to have better electrical performance while paying attention to the safety performance of the batteries in use. Lithium precipitation is one of the main factors affecting the electrical performance and the safety performance of the batteries. Once lithium precipitation occurs in a cell core, not only will the electrical performance of the battery be reduced, but also it is likely to form dendrites with the accumulation of lithium precipitation. The dendrites may puncture a separator and cause a short circuit in the battery, causing a safety hazard.

Therefore, how to effectively reduce the risk of lithium precipitation in batteries has become a technical problem to be solved urgently at present.

### Summary of the Invention

Embodiments of the present application provide a battery cell, a battery, a power consuming apparatus, and a method and apparatus for manufacturing a battery cell, which can effectively improve the safety performance of the battery cell.

In a first aspect, an embodiment of the present application provides a battery cell, comprising a housing, an electrode assembly and a first support member. The housing is provided with an accommodating cavity. The electrode assembly is accommodated in the accommodating cavity, and comprises a main body portion and a thinned portion, wherein at least one end of the main body portion in a first direction is connected to the thinned portion, and a part of an electrode plate of the electrode assembly at the main body portion has a thickness greater than that of a part of the electrode plate of the electrode assembly at the thinned portion. The first support member is arranged corresponding to the thinned portion, and is configured to support the thinned portion when the electrode assembly is expanded.

In the technical solution described above, the first support member is arranged in the housing and corresponding to the thinned portion such that when the electrode assembly is expanded, the first support member supports the thinned portion, so that the thinned portion can be in a stressed state with the support of the first support member, alleviating the problems of rapid capacity decay and even thermal runaway caused by uneven stresses on the main body portion and the thinned portion of the electrode assembly and uneven polarization and therefore by the deposition of lithium ions and the formation of lithium dendrites during charging and discharging due to the fact that under conventional circumstances, the electrode plate has a smaller thickness at the thinned portion so that the thinned portion is not in contact with an inner wall of the housing or adjacent thinned portions are not in contact with each other and thus the thinned portion(s) cannot be stressed. In addition, the uneven stresses on the main body portion and the thinned portion of the electrode assembly will also generate side reaction products such as metal lithium, lithium oxide, lithium fluoride and lithium carbonate. The side reaction products will consume lithium ions and the electrolytic solution, and affect the electrical conductivity, so that the capacity and the safety performance of the battery should be improved. Therefore, the provision of the first support member in the housing improves the capacity retention rate and the safety performance of the battery.

In some embodiments of the first aspect, the battery cell comprises a plurality of electrode assemblies, wherein the plurality of electrode assemblies are arranged side-by-side in a thickness direction of the battery cell; and the first support member comprises at least one first abutting portion, and at least one first abutting portion is arranged between the thinned portions of two adjacent electrode assemblies.

In the technical solution described above, in the case where the battery cell comprises a plurality of electrode assemblies arranged side-by-side in the thickness direction thereof and the first abutting portion of the first support member is arranged between the thinned portions of two adjacent electrode assemblies, when the electrode assemblies are expanded, adjacent parts of the thinned portions of the two adjacent electrode assemblies approach each other and press the first abutting portion, and the thinned portions are supported by the reaction force of the first abutting portion, so that the thinned portions of the two adjacent electrode assemblies can be in a stressed state with the support of the first abutting portion, reducing the risk of deposition of lithium ions and therefore lithium precipitation during charging and discharging caused by uneven polarization due to the fact that under conventional circumstances, the electrode plates have a smaller thickness at the parts of the thinned portions between the two adjacent electrode assemblies so that the thinned portions are not in contact with each other and thus cannot be stressed.

In some embodiments of the first aspect of the present application, two first abutting portions are arranged between the thinned portions of two adjacent electrode assemblies, and the two first abutting portions are configured to abut against each other in the thickness direction of the battery cell when the electrode assemblies are expanded, so as to support the thinned portions.

In the technical solution described above, two first abutting portions are arranged between the thinned portions of two adjacent electrode assemblies, and each first abutting portion may be arranged corresponding to a thinned portion, so that as the electrode assemblies are expanded, the two first abutting portions are abutting against each other in the direction of approaching each other, and when the two first abutting portions abut against each other, they provide a reverse support force for the corresponding thinned portions, reducing the deposition of lithium ions and the generation of side reaction products during charging and discharging caused by uneven polarization due to the fact that under conventional circumstances, the thinned portions of the two adjacent electrode assemblies have a smaller thickness so that the thinned portions are not in contact with each other and thus cannot be stressed.

In some embodiments of the first aspect of the present application, the first support member comprises a second abutting portion arranged between the thinned portion and an inner wall of the housing, the second abutting portion being configured to abut against the inner wall of the housing when the electrode assembly is expanded, so as to support the thinned portion.

In the technical solution described above, the second abutting portion is arranged between the thinned portion and the inner wall of the housing such that when the electrode assembly is expanded, the second abutting portion is supported between the thinned portion and the inner wall of the housing, so that the thinned portion can be in a stressed state with the support of the second abutting portion, reducing the risk of deposition of lithium ions and therefore lithium precipitation during charging and discharging caused by uneven polarization due to the fact that under conventional circumstances, the electrode plate has a smaller thickness at the thinned portion so that the thinned portion is not in contact with the inner wall of the housing and thus the thinned portion cannot be stressed.

In some embodiments of the first aspect of the present application, the part of the electrode plate at the thinned portion has a thickness gradually decreasing in a direction in which the thinned portion faces away from the main body portion.

In the technical solution described above, the part of the electrode plate at the thinned portion has a thickness gradually decreasing in the direction in which the thinned portion faces away from the main body portion, so that in a rolling process of the electrode plate, the pressure received by the part of the electrode plate at the thinned portion is smaller, thereby reducing the risk of peeling or falling off of the active material from the thinned portion of the electrode plate, and reducing the possibility of cracking at the interface between the part of the electrode plate at the thinned portion and the part of the electrode plate at the main body portion.

In some embodiments of the first aspect of the present application, a part of the first support member corresponding to the thinned portion has a thickness gradually increasing in the direction in which the thinned portion faces away from the main body portion.

In the technical solution described above, since the part of the electrode plate at the thinned portion has a thickness gradually decreasing in the direction in which the thinned portion faces away from the main body portion, that is, the part of the electrode plate at the thinned portion has a gradually increasing distance from the opposite inner wall of the housing or the thinned portion of the adjacent electrode assembly in the direction in which the thinned portion faces away from the main body portion, the part of the first support member corresponding to the thinned portion having a thickness gradually increasing in the direction in which the thinned portion faces away from the main body portion can complement the thickness change of the part of the electrode plate at the thinned portion, so that when the electrode assembly is expanded, the thinned portion can be supported by the first support member to make the thinned portion be stressed as uniformly as possible.

In some embodiments of the first aspect of the present application, the battery cell further comprises a second support member arranged corresponding to the main body portion, the second support member being configured to support the main body portion when the electrode assembly is expanded.

In the technical solution described above, the battery cell further comprises a second support member arranged corresponding to the main body portion such that when the battery cell is expanded, the second support member supports the main body portion, so that the main body portion is stressed as uniformly as possible, improving the polarization uniformity, and reducing the risk of deposition of lithium ions and generation of side reaction products during charging and discharging. The provision of the first support member and the second support member can alleviate the problems of lithium precipitation of the thinned portion and uneven expansion force of the main body portion.

In some embodiments of the first aspect of the present application, the second support member is connected to one end of the first support member in the first direction.

In the technical solution described above, the first support member is connected to the second support member such that the first support member and the second support member can be mutually restrained, relative displacement will not occur, and the mounting stability of the first support member and the second support member are improved, so that when the electrode assembly is expanded, the first support member can stably support the thinned portion, and the second support member can stably support the main body portion.

In some embodiments of the first aspect of the present application, the second support member and the first support member are of an integrally formed structure.

In the technical solution described above, the first support member and the second support member being of an integrally formed structure facilitates manufacturing, and can also reduce the number of steps for assembling the battery cell, and the integrally formed structure of the first support member and the second support member also has a good structural strength.

In some embodiments of the first aspect of the present application, a surface of the first support member facing away from the thinned portion is flush with a surface of the second support member facing away from the main body portion.

In the technical solution described above, the surface of the first support member facing away from the thinned portion is flush with the surface of the second support member facing away from the main body portion, such that when the surface of the second support member facing away from the main body portion is subjected to an abutting force in a direction facing the main body portion, the surface of the first support member facing away from the thinned portion is also subjected to an abutting force in a direction facing the thinned portion, so that the thinned portion and the main body portion are uniformly stressed.

In some embodiments of the first aspect of the present application, in a direction in which the first support member faces away from the thinned portion, a surface of the first support member facing away from the thinned portion protrudes from a surface of the main body portion or the surface of the first support member facing away from the thinned portion is flush with the surface of the main body portion.

In the technical solution described above, when the electrode assembly is expanded, the expansion amount of the main body portion is generally greater than the expansion amount of the thinned portion, so when the surface of the first support member facing away from the thinned portion protrudes from the surface of the main body portion in the direction in which the first support member faces away from the thinned portion, the protruding size can compensate for the difference in the expansion amount of the thinned portion relative to the main body portion during expansion, such that when the surface of the main body portion is subjected to an abutting force, the surface of the first support member facing away from the thinned portion is subjected to an abutting force in the direction facing the thinned portion, so that the thinned portion and the main body portion are uniformly stressed. When the surface of the first support member facing away from the thinned portion is flush with the surface of the main body portion, it is convenient to complete assembly of the battery cell.

In some embodiments of the first aspect of the present application, the electrode assembly has a central hole; and the battery cell further comprises a third support member which is inserted into the central hole and arranged corresponding to the thinned portion.

In the technical solution described above, when the electrode assembly is expanded, a part of the thinned portion will have a tendency to expand toward the center of the central hole, the third support member is inserted into the central hole and is arranged corresponding to the thinned portion, such that when the electrode assembly is expanded, the part of the thinned portion expanding toward the center of the central hole presses the third support member, and the thinned portion is supported with the reaction force of the third support member, so that the thinned portion expanding toward the center of the central hole can be in a stressed state, reducing the risk of deposition of lithium ions and generation of side reaction products during charging and discharging caused by uneven polarization due to the smaller thickness of the electrode plate at the thinned portion on the outer periphery of the central hole and the presence of the central hole so that the thinned portion is not in contact with the central hole and thus cannot be stressed.

In some embodiments of the first aspect of the present application, the first support member is arranged around an outer periphery of the thinned portion.

In the technical solution described above, the first support member is arranged around the outer periphery of the thinned portion, such that when the electrode assembly is expanded, the first support member can support the thinned portion at any position in the circumferential direction of the thinned portion, so that all the positions of the thinned portion in the circumferential direction can be stressed, and the thinned portion is uniformly polarized, reducing the risk of deposition of lithium ions and generation of side reaction products during charging and discharging.

In some embodiments of the first aspect of the present application, the first support member is fixed to the thinned portion.

In the technical solution described above, the first support member being fixed to the thinned portion enables the first support member to be closely attached to the thinned portion, so that during assembling of the battery cell and during charging and discharging of the battery cell, the first support member is not displaced relative to the electrode assembly.

In some embodiments of the first aspect of the present application, the electrode plate comprises a current collector and an active material layer arranged on a surface of the current collector, and the active material layer of the electrode plate has a greater thickness at the main body portion than at the thinned portion.

In the technical solution described above, in the rolling process of the electrode plate, the active material layer of the electrode plate may spread from the middle to two ends in the width direction and be accumulated, so the active material layer of the electrode plate having a greater thickness at the main body portion than at the thinned portion provides an accumulation compensation position for the active material layer accumulated from the middle to two ends, so that the thickness of the active material layer of the rolled electrode plate at the two ends in the width direction will not exceed the thickness thereof in the middle, reducing the accumulation amount of the active material layer at the two ends in the width direction. Moreover, the active material layer of the electrode plate having a greater thickness at the main body portion than at the thinned portion enables that in the rolling process of the electrode plate, the pressure received by the part of the electrode plate at the thinned portion is smaller, thereby reducing the risk of peeling or falling off of the active material from the thinned portion, and reducing the possibility of cracking at the interface between the part of the electrode plate at the thinned portion and the part of the electrode plate at the main body portion.

In a second aspect, an embodiment of the present application provides a battery, comprising a case and a battery cell provided in any embodiment of the first aspect, wherein the battery cell is accommodated in the case.

In the technical solution described above, since the battery cell of the battery is provided with a first support member in the housing, when the electrode assembly is expanded, the first support member supports the thinned portion, so that the thinned portion can be stressed, reducing the risk of rapid capacity decay and even thermal runaway and generation of side reaction products caused by uneven stresses on the electrode assembly, uneven polarization, the deposition of lithium ions and the formation of lithium dendrites during charging and discharging, and improving the safety performance and the electrical performance of the battery.

In a third aspect, an embodiment of the present application provides a power consuming apparatus, comprising any battery cell described in the first aspect.

In the technical solution described above, since the battery cell of the power consuming apparatus is provided with a first support member in the housing, when the electrode assembly is expanded, the first support member supports the thinned portion, so that the thinned portion can be stressed, reducing the risk of rapid capacity decay and even thermal runaway and generation of side reaction products caused by uneven polarization, the deposition of lithium ions and the formation of lithium dendrites during charging and discharging, and improving the safety performance and the electrical performance of the battery, thereby improving the safety of electricity consumption.

According to a fourth aspect, an embodiment of the present application provides a method for manufacturing a battery cell, the method comprising:
providing a housing, an electrode assembly and a first support member, wherein the housing is provided with an accommodating cavity, and the electrode assembly comprises a main body portion and a thinned portion, wherein at least one end of the main body portion in a first direction is connected to the thinned portion, and a part of an electrode plate of the electrode assembly at the main body portion has a thickness greater than that of a part of the electrode plate of the electrode assembly at the thinned portion; and
causing the electrode assembly and the first support member to be accommodated in the accommodating cavity, and arranging the first support member corresponding to the thinned portion, such that the first support member supports the thinned portion when the electrode assembly is expanded.

In the technical solution described above, the first support member is arranged in the housing and corresponding to the thinned portion such that when the electrode assembly is expanded, the first support member supports the thinned portion, so that the thinned portion can be in a stressed state with the support of the first abutting portion, reducing the risk of deposition of lithium ions and therefore lithium precipitation and generation of side reaction products during charging and discharging caused by uneven polarization due to the fact that under conventional circumstances, the electrode plate has a smaller thickness at the thinned portion so that the thinned portion is not in contact with an inner wall of the housing or adjacent thinned portions are not in contact with each other and thus the thinned portion(s) cannot be stressed.

In a fifth aspect, an embodiment of the present application provides an apparatus for manufacturing a battery cell, the apparatus comprising:
a provision device configured to provide a housing, an electrode assembly and a first support member, wherein the housing is provided with an accommodating cavity, and the electrode assembly comprises a main body portion and a thinned portion, wherein at least one end of the main body portion in a first direction is connected to the thinned portion, and a part of an electrode plate of the electrode assembly at the main body portion has a thickness greater than that of a part of the electrode plate of the electrode assembly at the thinned portion; and
an assembly device configured to cause the electrode assembly and the first support member to be accommodated in the accommodating cavity, and to arrange the first support member corresponding to the thinned portion, such that the first support member supports the thinned portion when the electrode assembly is expanded.

In the technical solution described above, the assembly device can arrange the first support member in the housing and corresponding to the thinned portion such that when the electrode assembly is expanded, the first support member supports the thinned portion, so that the thinned portion can be in a stressed state with the support of the first abutting portion, reducing the risk of deposition of lithium ions and therefore lithium precipitation and generation of side reaction products during charging and discharging caused by uneven polarization due to the fact that under conventional circumstances, the electrode plate has a smaller thickness at the thinned portion so that the thinned portion is not in contact with an inner wall of the housing or adjacent thinned portions are not in contact with each other and thus the thinned portion(s) cannot be stressed.

### Brief Description of the Drawings

In order to more clearly explain the technical solutions of the embodiments of the present application, the drawings being used in the embodiments will be described briefly below. It should be understood that the following drawings illustrate only some embodiments of the present application and are therefore not to be considered as a limitation on the scope thereof. For those of ordinary skill in the art, other relevant drawings can also be obtained from these drawings without any creative effort.
Fig. 1 is a schematic structural diagram of an electrode assembly in the prior art;
Fig. 2 is a schematic structural diagram of a vehicle provided in some embodiments of the present application;
Fig. 3 is a schematic structural diagram of a battery provided in some embodiments of the present application;
Fig. 4 is a structural schematic diagram of the connection of a plurality of battery cells provided in some embodiments of the present application;
Fig. 5 is an exploded view of a battery cell provided in some embodiments of the present application;
Fig. 6 is a cross-sectional view of a battery cell provided in some embodiments of the present application after a first support member, an electrode assembly and a housing are assembled;
Fig. 7 is an enlarged view of part I in Fig. 6;
Fig. 8 is a cross-sectional view of a battery cell provided in some other embodiments of the present application after a first support member, an electrode assembly and a housing are assembled;
Fig. 9 is an enlarged view of part II in Fig. 8;
Fig. 10 is a cross-sectional view of a side-by-side arrangement of more than three electrode assemblies provided in some embodiments of the present application;
Fig. 11 is an enlarged view of part III in Fig. 10;
Fig. 12 is a cross-sectional view of a side-by-side arrangement of more than three electrode assemblies provided in some other embodiments of the present application;
Fig. 13 is an enlarged view of part IV in Fig. 12;
Fig. 14 is a schematic diagram of a side-by-side arrangement of two electrode assemblies;
Fig. 15 is a schematic diagram of a side-by-side arrangement of more than two electrode assemblies;
Fig. 16 is a schematic diagram of a battery cell with only one electrode assembly;
Fig. 17 is a cross-sectional view of a battery cell with only one electrode assembly;
Fig. 18 is a schematic structural diagram of a battery cell provided in some other embodiments of the present application;
Fig. 19 is a flow block diagram of a method for manufacturing a battery cell provided in some embodiments of the present application; and
Fig. 20 is a schematic structural diagram of an apparatus for manufacturing a battery cell provided in some embodiments of the present application.

List of reference signs: 1 - Electrode plate; 1a - Current collector; 11a - Coated portion; 12a - Tab; 1b - Active material layer; 1000 - Vehicle; 100 - Battery; 10 - Case; 11 - Accommodating space; 12 - First portion; 13 - Second portion; 20 - Battery cell; 21 - Housing; 211 - Opening; 212 - Accommodating cavity; 22 - Electrode assembly; 221 - Thinned portion; 222 - Main body portion; 223 - Straight portion; 224 - Bent portion; 225 - Central hole; 22a - First edge electrode assembly; 22b - Second edge electrode assembly; 22c - Intermediate electrode assembly; 23 - End cap assembly; 231 - End cap; 232 - First electrode terminal; 233 - Second electrode terminal; 234 - Pressure relief mechanism; 24 - First support member; 241 - First abutting portion; 2411 - First supporting face; 2412 - First abutting face; 242 - Second abutting portion; 2421 - Second supporting face; 2422 - Second abutting face; 25 - Second support member; 26 - Third support member; 30 - Bus component; 200 - Controller; 300 - Motor; 2000 - Apparatus for manufacturing a battery cell; 2100 - Provision device; 2200 - Assembly device; A - First direction; B - Thickness direction of a battery cell; and C - Length direction of an electrode assembly.

### Detailed Description of Embodiments

In order to make the objectives, technical solutions and advantages of embodiments of the present application clearer, the technical solutions in the embodiments of the present application will be described clearly and completely below in conjunction with the accompanying drawings in the embodiments of the present application. Obviously, the embodiments described are some of, rather than all of, the embodiments of the present application. Generally, the assemblies of the embodiments of the present application described and illustrated in the drawings herein may be arranged and designed in a variety of different configurations.

Thus, the following detailed description of the embodiments of the present application provided in the drawings is not intended to limit the scope of the present application as claimed, but is merely representative of the selected embodiments of the present application. All the other embodiments obtained by those of ordinary skill in the art based on the embodiments of the present application without creative efforts shall fall within the scope of protection of the present application.

It should be noted that the embodiments in the present application and features in the embodiments may be combined with each other without conflicts.

It should be noted that like numerals and letters refer to like items in the following figures, so once an item is defined in one figure, it does not require further definition and explanation in subsequent figures.

In the description of the embodiments of the present application, it should be noted that the indicated orientations or positional relationships are based on the orientations or positional relationships shown in the accompanying drawings or are orientations or positional relationships in which a product of the present application is conventionally placed when in use, or the orientations or positional relationships commonly understood by those skilled in the art, and are intended to facilitate the description of the present application and simplify the description only, rather than indicating or implying that the device or element referred to must have a particular orientation or be constructed and operated in a particular orientation, and will not to be interpreted as limiting the present application. In addition, the terms "first", "second", "third", etc. are used for discriminative description purposes only, and shall not be construed as indicating or implying relative importance.

"A plurality of" appearing in the present application means two or more (including two).

In the present application, a battery cell may include a lithium ion secondary battery, a lithium ion primary battery, a lithium-sulfur battery, a sodium/lithium ion battery, a sodium ion battery or a magnesium ion battery, and the like, which is not limited in the embodiments of the present application. The battery cell may be cylindrical, flat, cuboid or in another shape, which is not limited in the embodiments of the present application. The battery cells are generally classified into three types depending on the way of packaging: cylindrical battery cells, prismatic battery cells and pouch battery cells, which also will not be limited in the embodiments of the present application.

A battery mentioned in the embodiments of the present application refers to a single physical module comprising one or more battery cells to provide a higher voltage and capacity. For example, the battery mentioned in the present application may comprise a battery module, a battery pack, or the like. The battery generally comprises a case for packaging one or more battery cells. The case can reduce the influence of liquid or other foreign matters on the charging or discharging of the battery cell.

The electrode assembly of the battery cell is the core component that realizes the charging and discharging functions. The battery cell comprises an electrode assembly and an electrolytic solution. The electrode assembly is composed of a positive electrode plate, a negative electrode plate and a separator. The battery cells operate mainly by means of metal ions moving between the positive electrode plate and the negative electrode plate. The positive electrode plate comprises a positive electrode current collector and a positive electrode active material layer. A surface of the positive electrode current collector is coated with the positive electrode active material layer, the positive electrode current collector that is not coated with the positive electrode active material layer protrudes from the positive electrode current collector coated with the positive electrode active material layer, and the positive electrode current collector that is not coated with the positive electrode active material layer is used as a positive electrode tab. A lithium ion battery is taken as an example, the positive electrode current collector may be made of aluminum, and a positive electrode active material may be lithium cobalt oxide, lithium iron phosphate, ternary lithium, lithium manganate, or the like. The negative electrode plate comprises a negative electrode current collector and a negative electrode active material layer. A surface of the negative electrode current collector is coated with the negative electrode active material layer, the negative electrode current collector that is not coated with the negative electrode active material layer protrudes from the negative electrode current collector coated with the negative electrode active material layer, and the negative electrode current collector that is not coated with the negative electrode active material layer is used as a negative electrode tab. The negative electrode current collector may be made of copper, and a negative electrode active material may be carbon, silicon, or the like. In order to ensure that no fusing occurs when a large current passes, a plurality of positive electrode tabs are provided and are stacked together, and a plurality of negative electrode tabs are provided and are stacked together. The separator may be made from PP (polypropylene), PE (polyethylene), or the like. In addition, the electrode assembly may be of a winding structure or a laminated structure, which is not limited in the embodiments of the present application.

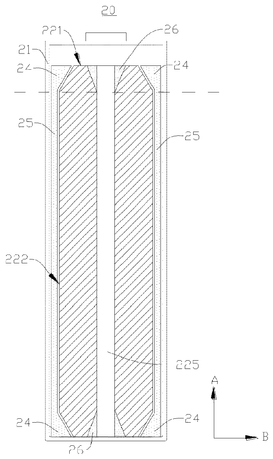

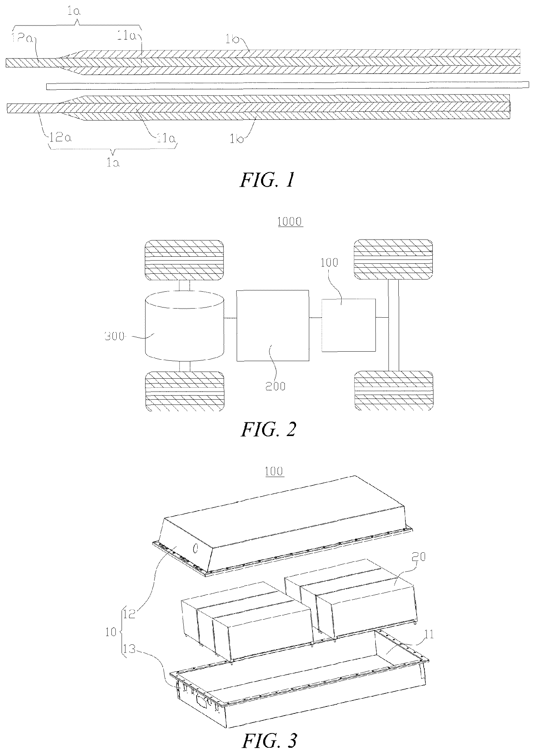

In order to meet production demands, in a width direction of an electrode plate 1 (a positive electrode plate and/or a negative electrode plate), two ends of the electrode plate 1 need to be thinned, to prevent edge over-pressure and breakage of the electrode plate 1. As shown in Fig. 1, the electrode plate 1 comprises a current collector 1a and an active material layer 1b coated on a surface of the current collector 1a. The current collector 1a comprises a coated portion 11a coated with the active material layer 1b and a tab 12a that is not coated with the active material layer 1b. The positive electrode plate comprises a positive electrode current collector and a positive electrode active material layer. The positive electrode current collector comprises a first coated portion coated with the positive electrode active material layer and a positive electrode tab that is not coated with the positive electrode active material layer. The negative electrode plate comprises a negative electrode current collector and a negative electrode active material layer. The negative electrode current collector comprises a second coated portion coated with the negative electrode active material layer and a negative electrode tab that is not coated with the negative electrode active material layer. In a process of forming the electrode plate 1 or in a process of rolling the electrode assembly, it is generally necessary to roll the active material layer 1b of the electrode plate 1 to increase the density of the active material layer 1b.

However, due to the existence of the active material layer 1b, a thickness difference exists at the interface between the coated portion 11a and the tab 12a of the electrode plate 1. Therefore, during rolling, stress may be concentrated on the interface between the active material layer 1b and the tab 12a, resulting in that the active material layer 1b is peeled off, and cracks are generated in the current collector 1a. In order to relieve stress, the thickness of the active material layer 1b at the end near the tab 12a is generally reduced, to form a region with a smaller thickness. In the electrode assembly, the region with a smaller thickness may increase the distance between the end of the active material layer 1b and other structures (such as an inner wall of a housing, and an adjacent electrode assembly), so that when the electrode assembly is expanded, all the region with a smaller thickness cannot be in contact with other structures (such as the inner wall of the housing, and the adjacent electrode assembly), and thus the region with a smaller thickness cannot be stressed like the region with a greater thickness, resulting in uneven polarization, causing deposition of lithium ions and generation of side reaction products and generation of side reaction products during charging and discharging and therefore lithium precipitation, which affects the performance of the secondary battery. The side reaction products comprise metal lithium, lithium oxide, lithium fluoride, lithium carbonate, etc., and the side reaction products will consume lithium ions and the electrolytic solution, and affect the electrical conductivity, so that the capacity and the safety performance of the battery should be improved.

In view of this, an embodiment of the present application provides a technical solution in which a first support member is provided in the housing. The first support member is arranged in the housing and corresponding to the thinned portion such that when the electrode assembly is expanded, the thinned portion can be in a stressed state with the support of the first support member, reducing the possibility of deposition of lithium ions and therefore lithium precipitation and generation of side reaction products during charging and discharging caused by uneven polarization due to the fact that under conventional circumstances, the electrode plate has a smaller thickness at the thinned portion so that the thinned portion is not in contact with an inner wall of the housing or adjacent thinned portions are not in contact with each other and thus the thinned portion(s) cannot be stressed, thereby reducing the risk of lithium precipitation.

The technical solutions described in the embodiments of the present application are applicable to batteries and power consuming apparatuses using the batteries.

The power consuming apparatus may be a vehicle, a mobile phone, a portable apparatus, a notebook computer, a ship, a spacecraft, an electric toy, an electric tool, and the like. The vehicle may be a fuel vehicle, a gas vehicle or a new-energy vehicle. The new-energy vehicle may be a battery electric vehicle, a hybrid vehicle, an extended-range vehicle, or the like. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The power consuming apparatuses mentioned above are not specially limited in the embodiments of the present application.

For ease of description, an example in which the power consuming apparatus refers to a vehicle 1000 is used for description in the following embodiments.

Referring to Fig. 2, a battery 100 is provided inside the vehicle 1000, and the battery 100 may be provided at the bottom, the front or the back of the vehicle 1000. The battery 100 may be configured to supply power to the vehicle 1000. For example, the battery 100 may be used as an operating power supply of the vehicle 1000.

The vehicle 1000 may further comprise a controller 200 and a motor 300. The controller 200 is configured to control the battery 100 to supply power to the motor 300, for example, to satisfy the working power requirements during the starting, navigation and traveling of the vehicle 1000.

In some embodiments of the present application, the battery 100 can not only serve as an operating power supply for the vehicle 1000, but also serve as a driving power supply for the vehicle 1000, in place of or partially in place of fuel or natural gas, to provide driving power for the vehicle 1000.

Referring to Fig. 3, the battery 100 comprises a case 10 and a battery cell 20. The battery cell 20 is received in the case 10. The case 10 is configured to provide an accommodating space 11 for the battery cell 20. In some embodiments, the case 10 may comprise a first portion 12 and a second portion 13. The first portion 12 and the second portion 13 covers each other to define the accommodating space 11 for accommodating the battery cell 20. Of course, a connection between the first portion 12 and the second portion 13 may be sealed by a sealing member (not shown in the figures). The sealing member may be a sealing ring, a sealant or the like.

The first portion 12 and the second portion 13 may be of various shapes such as a cuboid and a cylinder. The first portion 12 may be of a hollow structure with one side open, the second portion 13 may also be of a hollow structure with one side open, and the open side of the second portion 13 covers the open side of the first portion 12, such that the case 10 having the accommodating space 11 is formed. Of course, it is also possible that the first portion 12 is of a hollow structure with one side open, the second portion 13 is of a plate-like structure, and the second portion 13 covers the open side of the first portion 12, such that the case 10 having the accommodating space 11 is formed.

In the battery 100, there may be one or more battery cells 20. If a plurality of battery cells 20 are provided, the plurality of battery cells 20 may be connected to each other in series, in parallel, or in series-parallel. The series-parallel connection refers that some of the plurality of battery cells 20 are connected in series and the rest are connected in parallel. The plurality of battery cells 20 may be directly connected to each other in series or in parallel or in series-parallel, and then a whole body composed of the plurality of battery cells 20 is accommodated in the case 10. Of course, it is also possible that a plurality of battery cells 20 are first connected in series or in parallel or in series-parallel to form a battery module, and a plurality of battery modules are then connected in series or in parallel or in series-parallel connection to form a whole and are accommodated in the case 10. The battery cell 20 may be in the shape of a cylinder, a flat body, a cuboid or others. Fig. 3 exemplarily shows a battery cell 20 in the form of a cube.

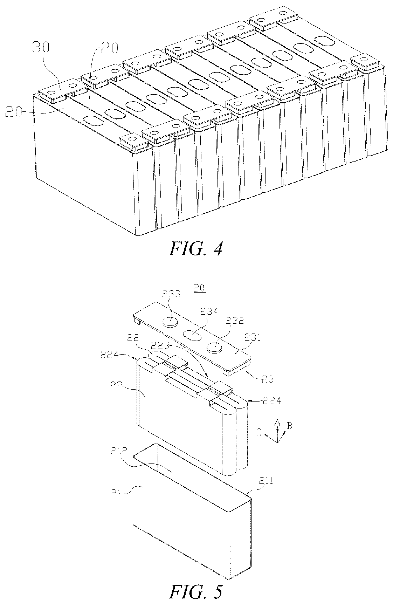

Referring to Fig. 4, in some embodiments, the battery 100 may further comprise a bus component 30, and the plurality of battery cells 20 may be electrically connected to each other via the bus component 30, so as to implement series connection, parallel connection, or series-parallel connection of the plurality of battery cells 20.

Referring to Fig. 5, the battery cell 20 may comprise a housing 21, an electrode assembly 22 and an end cap assembly 23. The housing 21 is provided with an opening 211 and an accommodating cavity 212, the electrode assembly 22 can enter the accommodating cavity 212 from the opening 211 such that the electrode assembly 22 is accommodated in the accommodating cavity 212, and the end cap assembly 23 is configured to cover the opening 211.

The housing 21 may have various shapes such as a cylinder and a cuboid. The housing 21 may be shaped depending on the specific shape of the electrode assembly 22. For example, if the electrode assembly 22 is of a cylindrical structure, a housing 21 of a cylindrical structure may be used; and if the electrode assembly 22 is of a cuboid structure, a housing 21 of a cuboid structure may be used. Fig. 5 exemplarily shows the housing 21 and the electrode assembly 22 in the form of cubes.

The housing 21 may also be made of various materials, such as copper, iron, aluminum, stainless steel, an aluminum alloy and plastic, which will not be particularly limited in the embodiments of the present application.

The electrode assembly 22 may comprise a positive electrode plate (not shown in the figures), a negative electrode plate (not shown in the figures) and a separator (not shown in the figures). The electrode assembly 22 may be of a winding structure formed by winding the positive electrode plate, the separator and the negative electrode plate, or a laminated structure formed by laminating the positive electrode plate, the separator and the negative electrode plate. The electrode assembly 22 further comprises a positive electrode tab and a negative electrode tab. A positive electrode current collector in the positive electrode plate that is not coated with a positive electrode active material layer may be used as the positive electrode tab, and a negative electrode current collector in the negative electrode plate that is not coated with a negative electrode active material layer may be used as the negative electrode tab.

The end cap assembly 23 is configured to cover the opening 211 of the housing 21, so as to cover the electrode assembly 22 in the accommodating cavity 212. The accommodating cavity 212 is configured to accommodate the electrode assembly 22. The accommodating cavity 212 is also configured to accommodate an electrolyte, such as an electrolytic solution. The end cap assembly 23 is used as a component for outputting the electrical energy from the electrode assembly 22. An electrode terminal in the end cap assembly 23 is configured to be electrically connected to the electrode assembly 22, that is, the electrode terminal is electrically connected to the tab of the electrode assembly 22. For example, the electrode terminal is connected to the tab via the current collector 1a to realize the electrical connection between the electrode terminal and the tab.

It should be noted that, as shown in Fig. 5, there may be one or two openings 211 of the housing 21. If there is one opening 211 of the housing 21, there also may be one end cap assembly 23. Two electrode terminals may be provided in the end cap assembly 23, and are configured to be respectively electrically connected to the positive electrode tab and the negative electrode tab of the electrode assembly 22. The two electrode terminals in the end cap assembly 23 are respectively a positive electrode terminal and a negative electrode terminal. If there are two openings 211 of the housing 21, for example, the two openings 211 are arranged on opposite sides of the housing 21, there also may be two end cap assemblies 23. The two end cap assemblies 23 respectively cover the two openings 211 of the housing 21. In this case, the electrode terminal in one of the end cap assemblies 23 may be a positive electrode terminal for electrical connection with the positive electrode tab of the electrode assembly 22; and the electrode terminal in the other end cap assembly 23 may be a negative electrode terminal for electrical connection with the negative electrode plate of the electrode assembly 22.

The end cap assembly 23 may comprise an end cap 231, a first electrode terminal 232, a second electrode terminal 233 and a pressure relief mechanism 234.

The first electrode terminal 232 and the second electrode terminal 233 are both mounted on the end cap 231. The pressure relief mechanism 234 is located between the first electrode terminal 232 and the second electrode terminal 233, and the pressure relief mechanism 234 is configured to be actuated when an internal pressure or temperature of the battery cell 20 reaches a threshold to relieve the internal pressure of the battery cell 20.

The end cap 231 of the end cap assembly 23 is configured to cover the opening 211 of the housing 21 (see Fig. 5 ). The end cap 231 may have various shapes such as a circle and a rectangle. The shape of the end cap 231 depends on the shape of the housing 21. If the housing 21 is of a cylindrical structure, a circular end cap 231 may be used; and if the housing 21 is of a cuboid structure, a cuboid end cap 231 may be used. As shown in Fig. 5, the end cap 231 is of a rectangular structure.

It should be noted that the polarities of the first electrode terminal 232 and the second electrode terminal 233 of the end cap assembly 23 may be the same or different.

In some embodiments, the polarities of the first electrode terminal 232 and the second electrode terminal 233 are the same, and the first electrode terminal 232 and the second electrode terminal 233 may be both positive electrode terminals for electrical connection with the positive electrode tab of the electrode assembly 22. The first electrode terminal 232 and the second electrode terminal 233 may also be both negative electrode terminals for electrical connection with the negative electrode tab of the electrode assembly 22.

In some embodiments, the polarities of the first electrode terminal 232 and the second electrode terminal 233 are opposite, one of the first electrode terminal 232 and the second electrode terminal 233 is a positive electrode terminal for electrical connection with the positive electrode tab of the electrode assembly 22, and the other is a negative electrode terminal for electrical connection with the negative electrode tab of the electrode assembly 22.

In the battery cell 20, there may be one or two end cap assemblies 23.

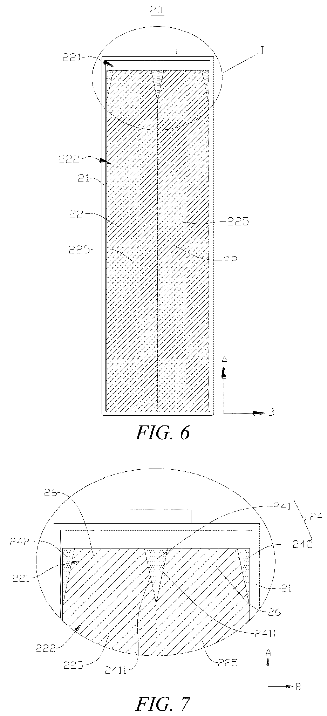

Referring to Figs. 6 and 7, in some embodiments, the battery cell 20 comprises a housing 21, an electrode assembly 22 and a first support member 24. The housing 21 is provided with an accommodating cavity 212. The electrode assembly 22 is accommodated in the accommodating cavity 212. The electrode assembly 22 comprises a main body portion 222 and a thinned portion 221. At least one end of the main body portion 222 in a first direction A is connected to the thinned portion 221, and a part of an electrode plate of the electrode assembly 22 at the main body portion 222 has a thickness greater than that of a part of the electrode plate of the electrode assembly 22 at the thinned portion 221. The first support member 24 is arranged corresponding to the thinned portion 221, and the first support member 24 is configured to support the thinned portion 221 when the electrode assembly 22 is expanded.

The first support member 24 is arranged in the housing 21 and corresponding to the thinned portion 221 such that when the electrode assembly 22 is expanded, the first support member 24 supports the thinned portion 221, so that the thinned portion 221 can be in a stressed state with the support of the first support member 24, reducing the risk of rapid capacity decay and even thermal runaway caused by uneven stresses on the main body portion and the thinned portion of the electrode assembly and uneven polarization and therefore by the deposition of lithium ions and the formation of lithium dendrites during charging and discharging due to the fact that under conventional circumstances, the thinned portion 221 has a smaller thickness so that the thinned portion 221 is not in contact with an inner wall of the housing 21 or adjacent thinned portions 221 are not in contact with each other and thus the thinned portion(s) 221 cannot be stressed. In addition, the uneven stresses on the main body portion and the thinned portion of the electrode assembly will also generate side reaction products such as metal lithium, lithium oxide, lithium fluoride and lithium carbonate. The side reaction products will consume lithium ions and the electrolytic solution, and affect the electrical conductivity, so that the capacity and the safety performance of the battery should be improved. Therefore, the provision of the first support member in the housing improves the capacity retention rate and the safety performance of the battery.

It should be noted that the first direction A is consistent with the width direction of the electrode plate of the electrode assembly 22. For a wound electrode assembly 22, the first direction A is also consistent with the direction of a winding axis of the wound electrode assembly 22.

The electrode plate 1 (referring to Fig. 1) comprises a current collector 1a and an active material layer 1b arranged on a surface of the current collector 1a, and the active material layer 1b of the electrode plate 1 at the main body portion 222 has a greater thickness than that of the active material layer 1b of the electrode plate 1 at the thinned portion 221. The electrode plate 1 may be a positive electrode plate and/or a negative electrode plate. In the rolling process of the electrode plate 1, the active material layer 1b of the electrode plate 1 may spread from the middle to two ends in the width direction and be accumulated at the two ends in the width direction of the electrode plate 1, so the active material layer 1b of the electrode plate 1 at the main body portion 222 having a greater thickness than that of the active material layer 1b of the electrode plate 1 at the thinned portion 221 provides an accumulation compensation position for the active material layer 1b accumulated from the middle to two ends, so that the thickness of the active material layer 1b of the rolled electrode plate 1 at the two ends in the width direction will not exceed the thickness thereof in the middle, reducing the accumulation amount of the active material layer 1b at the two ends in the width direction. Moreover, the active material layer 1b of the electrode plate at the main body portion 222 having a greater thickness than that of the active material layer 1b of the electrode plate 1 at the thinned portion 221 enables that in the rolling process of the electrode plate, the pressure received by the part of the electrode plate at the thinned portion 221 is smaller, thereby reducing the risk of peeling or falling off of the active material from the electrode plate at the thinned portion 221, and reducing the possibility of cracking at the interface between the part of the electrode plate at the thinned portion 221 and the part of the electrode plate at the main body portion 222.

In some embodiments, it is possible for the electrode assembly 22 that only the thickness of the positive electrode active material layer of the positive electrode plate at the main body portion 222 is greater than the thickness of the positive electrode active material layer of the positive electrode plate at the thinned portion 221, and the thickness of the negative electrode active material layer of the negative electrode plate at the main body portion 222 is equal to the thickness of the negative electrode active material layer of the negative electrode plate at the thinned portion 221.

In some other embodiments, it is possible for the electrode assembly 22 that only the thickness of the negative electrode active material layer of the negative electrode plate at the main body portion 222 is greater than the thickness of the negative electrode active material layer of the negative electrode plate at the thinned portion 221, and the thickness of the positive electrode active material layer of the positive electrode plate at the main body portion 222 is equal to the thickness of the positive electrode active material layer of the positive electrode plate at the thinned portion 221.

In some embodiments, the thickness of the positive electrode active material layer of the positive electrode plate of the electrode assembly 22 at the main body portion 222 is greater than the thickness of the positive electrode active material layer of the positive electrode plate at the thinned portion 221, and the thickness of the negative electrode active material layer of the negative electrode plate at the main body portion 222 is greater than the thickness of the negative electrode active material layer of the negative electrode plate of the electrode assembly 22 at the thinned portion 221.

In some embodiments, in the first direction A, one end of the main body portion 222 of the electrode assembly 22 is connected to the thinned portion 221. In some other embodiments, in the first direction A, two ends of the main body portion 222 of the electrode assembly 22 are connected to thinned portions 221.

In the case where in the first direction A, two ends of the main body portion 222 of the electrode assembly 22 are connected to the thinned portions 221, for the convenience of description, the two thinned portions 221 are respectively defined as a first thinned portion 221 and a second thinned portion 221. In some embodiments, it is possible that the thickness of the positive electrode active material layer of the positive electrode plate at the first thinned portion 221 is smaller than the thickness of the positive electrode active material layer of the positive electrode plate at the main body portion 222, the thickness of the positive electrode active material layer of the positive electrode plate at the second thinned portion 221 is equal to the thickness of the positive electrode active material layer of the positive electrode plate at the main body portion 222, the thickness of the negative electrode active material layer of the negative electrode plate at the first thinned portion 221 is equal to the thickness of the negative electrode active material layer of the negative electrode plate at the main body portion 222, and the thickness of the negative electrode active material layer of the negative electrode plate at the second thinned portion 221 is smaller than the thickness of the negative electrode active material layer of the negative electrode plate at the main body portion 222. In some other embodiments, it is possible that the thickness of the positive electrode active material layer of the positive electrode plate at each of the first thinned portion 221 and the second thinned portion 221 is smaller than the thickness of the positive electrode active material layer of the positive electrode plate at the main body portion 222, and the thickness of the negative electrode active material layer of the negative electrode plate at each of the first thinned portion 221 and the second thinned portion 221 is smaller than the thickness of the negative electrode active material layer of the negative electrode plate at the main body portion 222.

There are various forms for making the thickness of the part of the electrode plate 1 at the thinned portion 221 smaller than the thickness of the part of the electrode plate 1 at the main body portion 222. In some embodiments, the part of the electrode plate 1 at the thinned portion 221 has a thickness gradually decreasing in the direction in which the thinned portion 221 faces away from the main body portion 222, so that in a rolling process of the electrode plate 1, the pressure received by the part of the electrode plate 1 at the thinned portion 221 is smaller, thereby reducing the risk of peeling or falling off of the active material from the thinned portion 221, and reducing the possibility of cracking at the interface between the part of the electrode plate 1 at the thinned portion 221 and the part of the electrode plate 1 at the main body portion 222. The part of the electrode plate 1 at the thinned portion 221 has a thickness gradually decreasing in the direction in which the thinned portion 221 faces away from the main body portion 222, so that the part of the active material layer 1b of the electrode plate 1 at the thinned portion 221 forms an inclined surface on the side facing away from the current collector 1a. The surface of the active material layer 1b of the electrode plate 1 refers to a face of the active material layer 1b on the side facing away from the current collector 1a.

Since the part of the electrode plate 1 at the thinned portion 221 has a thickness gradually decreasing in the direction in which the thinned portion 221 faces away from the main body portion 222, that is, the part of the electrode plate 1 at the thinned portion 221 has a gradually increasing distance from the opposite inner wall of the housing 21 or the thinned portion 221 of the adjacent electrode assembly 22 in the direction in which the thinned portion 221 faces away from the main body portion 222, the part of the first support member 24 corresponding to the thinned portion 221 has a thickness gradually increasing in the direction in which the thinned portion 221 faces away from the main body portion 222 in some embodiments. The part of the first support member 24 corresponding to the thinned portion 221 having a thickness gradually increasing in the direction in which the thinned portion 221 faces away from the main body portion 222 can complement the thickness change of the part of the electrode plate 1 at the thinned portion 221, so that when the electrode assembly 22 is expanded, the thinned portion 221 can be supported by the first support member 24 to make the thinned portion 221 be stressed as uniformly as possible.

In some other embodiments, the part of the electrode plate 1 at the thinned portion 221 has a constant thickness in the direction in which the thinned portion 221 faces away from the main body portion 222. The thickness of the part of the electrode plate 1 at the thinned portion 221 is smaller than the thickness of the part of the electrode plate 1 at the main body portion 222, so that a step is formed at the interface between the part of the electrode plate 1 at the thinned portion 221 and the part of the electrode plate at the main body portion 222.

In some embodiments, the first support member 24 is fixed to the thinned portion 221. The first support member 24 being fixed to the thinned portion 221 enables the first support member 24 to be closely attached to the thinned portion 221, so that during assembling of the battery cell 20 and during charging and discharging of the battery cell 20, the first support member 24 is not displaced relative to the electrode assembly 22. The first support member 24 may be fixed to the thinned portion 221 by means of glue bonding, adhesive tape binding, or the like.

In some embodiments, it is also possible that the first support member 24 is fixed to the inner wall of the housing 21.

In the embodiment of the present application, a battery cell 20 comprising a cuboid wound electrode assembly is taken as an example to introduce the related structure of the battery cell 20. In the thickness direction of the electrode assembly 22, the electrode assembly 22 has a straight portion 223. In the length direction C of the electrode assembly, the electrode assembly 22 has two opposite bent portions 224, and two ends of the straight portion 223 are respectively connected to the two bent portions 224. Each thinned portion 221 comprises a part at the straight portion 223 and parts at the two bent portions 224. The first direction A, the thickness direction B of the battery cell and the length direction C of the electrode assembly are perpendicular to one another.

Referring to Fig. 7, which is an enlarged view of part I in Fig. 6, in some embodiments, the battery cell 20 comprises a plurality of electrode assemblies 22. The plurality of electrode assemblies 22 are arranged side-by-side in the thickness direction B of the battery cell. The first support member 24 comprises at least one first abutting portion 241, and at least one first abutting portion 241 is arranged between the thinned portions 221 of two adjacent electrode assemblies 22.

In the case where the battery cell 20 comprises a plurality of electrode assemblies 22 arranged side-by-side in the thickness direction thereof and the first abutting portion 241 of the first support member 24 is arranged between the thinned portions 221 of two adjacent electrode assemblies 22, when the electrode assemblies 22 are expanded, adjacent parts of the thinned portions 221 of the two adjacent electrode assemblies 22 approach each other and press the first abutting portion 241, and the thinned portions 221 are supported by the reaction force of the first abutting portion 241, so that the thinned portions 221 of the two adjacent electrode assemblies 22 can be in a stressed state with the support of the first abutting portion 241, reducing the risk of deposition of lithium ions and generation of side reaction products during charging and discharging caused by uneven polarization due to the fact that under conventional circumstances, the parts of the thinned portions 221 between the two adjacent electrode assemblies 22 have a smaller thickness so that the thinned portions are not in contact with each other and thus cannot be stressed.

The first abutting portion 241 is at least partially arranged between the parts of the thinned portions 221 of the two adjacent electrode assemblies 22 at the straight portions 223.

In some embodiments, one first abutting portion 241 is arranged between the thinned portions 221 of two adjacent electrode assemblies 22. The first abutting portion 241 may be of a triangular prism structure. As shown in Fig. 7, in the side-by-side direction of the two electrode assemblies 22, the first abutting portion 241 has two first supporting faces 2411. One first supporting face 2411 of the two first supporting faces 2411 is configured to be attached to the thinned portion 221 of one electrode assembly 22 of the two electrode assemblies 22, and the other first supporting face 2411 of the two first supporting faces 2411 is configured to be attached to the thinned portion 221 of the other electrode assembly 22 of the two electrode assemblies 22. The two first supporting faces 2411 are inclined faces, and the inclination direction of each inclined face is consistent with that of the surface of the part of the electrode plate 1 of the corresponding electrode assembly 22 at the thinned portion 221, so that the first supporting face 2411 can be better attached to the thinned portion 221, and the first support member 24 can thus make the thinned portion 221 stressed as uniformly as possible. When the electrode assemblies 22 are expanded, the opposite parts of the thinned portions 221 of the two electrode assemblies 22 are expanded in the direction of approaching each other, and cooperate with the corresponding first supporting faces 2411 respectively, to press the first abutting portion 241. The first abutting portion 241 reacts to the thinned portions 221, so that the thinned portions 221 are subjected to the reaction forces of the first abutting portion 241, alleviating the deposition of lithium ions and therefore lithium precipitation and the generation of side reaction products during charging and discharging caused by uneven polarization due to the fact that the electrode plate 1 has a smaller thickness at the thinned portion 221 so that the thinned portion 221 is not in contact with an adjacent thinned portion 221 and thus the thinned portions cannot be stressed.

In the embodiment of the present application, the side-by-side direction of the electrode assemblies 22 is consistent with the thickness direction B of the battery cell.

The two first supporting faces 2411 of one first abutting portion 241 between two electrode assemblies 22 may respectively form a fixed connection relationship with the thinned portions 221 of the two electrode assemblies 22 by means of adhesive bonding or the like. It is also possible that the first abutting portion 241 is pressed between two adjacent electrode assemblies 22 by pressing the two electrode assemblies 22 against each other.

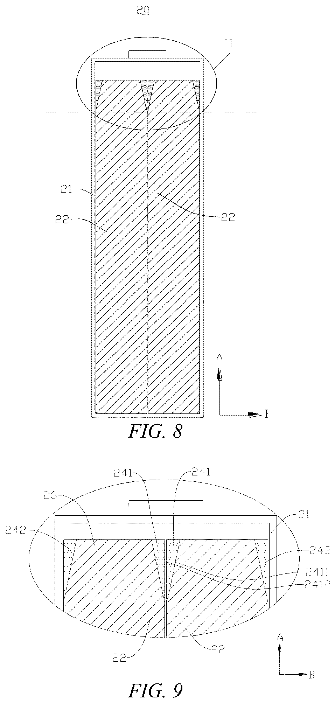

Referring to Figs. 8 and 9, in some embodiments, two first abutting portions 241 are provided between the thinned portions 221 of two adjacent electrode assemblies 22, and the two first abutting portions 241 are configured to abut against each other in the thickness direction B of the battery cell when the electrode assemblies 22 are expanded, so as to support the thinned portions 221. Each first abutting portion 241 may be arranged corresponding to one thinned portion 221. As the electrode assemblies 22 are expanded, the two first abutting portions 241 are abutting against each other in the direction of approaching each other. When the two first abutting portions 241 abut against each other, they provide a reverse support force for the corresponding thinned portions 221, so that the parts of the thinned portions 221 between the two adjacent electrode assemblies 22 are stressed, reducing the risk of deposition of lithium ions and generation of side reaction products during charging and discharging caused by uneven polarization due to the fact that under conventional circumstances, the parts of the thinned portions 221 between the two adjacent electrode assemblies 22 have a smaller thickness so that the thinned portions are not in contact with each other and thus cannot be stressed.

As shown in Fig. 9, the battery cell 20 comprises two electrode assemblies 22 arranged side-by-side, and the two first abutting portions 241 are provided between the opposite parts of the thinned portions 221 of the two electrode assemblies 22.

The first abutting portion 241 has a first supporting face 2411 and a first abutting face 2412. The first supporting face 2411 is configured to be attached to the thinned portion 221, and the first supporting face 2411 is an inclined face. The inclination direction of the first supporting face 2411 of each first abutting portion 241 is consistent with that of the surface of the part of the active material layer 1b of the electrode plate of the corresponding electrode assembly 22 at the thinned portion 221, so that the first supporting face 2411 can be better attached to the thinned portion 221, and the first support member 24 can thus make the thinned portion 221 stressed as uniformly as possible. The first supporting face 2411 may be in the side-by-side direction of the two electrode assemblies 22, the first abutting face 2412 is located on the side of the first support member 24 away from the thinned portion 221, and the two first abutting faces 2412 are configured to abut against each other under the action of the expansion forces of the electrode assemblies 22. When the electrode assemblies 22 are expanded, the opposite parts of the thinned portions 221 of the two electrode assemblies 22 are expanded in the direction of approaching each other, and cooperate with the corresponding first supporting faces 2411 respectively, to press the first abutting portion 241, so as to abut the first abutting faces 2412 of the two first abutting portions 241 against each other, and apply reaction forces to the thinned portions 221, so that the thinned portions 221 are subjected to the reaction forces of the first abutting portion 241, alleviating the deposition of lithium ions and therefore lithium precipitation and the generation of side reaction products during charging and discharging caused by uneven polarization due to the fact that the electrode plate 1 has a smaller thickness at the thinned portion 221 so that the thinned portion 221 is not in contact with an adjacent thinned portion 221 and thus the thinned portions cannot be stressed.

In some embodiments, the inclination angle of the first supporting face 2411 relative to the first abutting face 2412 is between 0.1° and 50°, and may be specifically selected from 1° to 45° or 5° to 30°.

The length of the first supporting face 2411 in the extending direction thereof may be set to be 0.1 mm to 25 mm, and the length of the first abutting face 2412 in the first direction A may be set to be 0.1 mm to 10 mm.

In the case where two first abutting portions 241 are provided between two adjacent electrode assemblies 22, the first supporting face 2411 of one first abutting portion 241 of the two first abutting portions 241 is connected to the thinned portion 221 of one of the electrode assemblies 22, and the first supporting face 2411 of the other first abutting portion 241 is connected to the thinned portion 221 of the other electrode assembly 22, so that the two first abutting portions 241 are respectively integrally connected to the two electrode assemblies 22 for ease of mounting. With this structure, when the electrode assemblies 22 are not expanded, the first abutting faces 2412 of the two first abutting portions 241 may abut against each other, or may be arranged apart from each other.

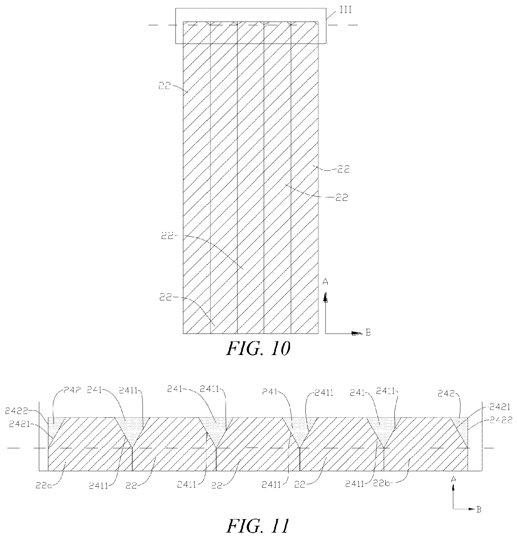

In some embodiments, the battery cell 20 may also comprise more than two electrode assemblies 22. Referring to Figs. 10 and 11, Fig. 10 shows a schematic structural diagram in which more than three electrode assemblies 22 are comprised and one first abutting portion 241 is arranged between two adjacent electrode assemblies 22, and Fig. 11 shows an enlarged view of part III in Fig. 10. In the battery cell 20 shown in Figs. 10 and 11, in the side-by-side direction of the electrode assemblies 22, two adjacent first abutting portions 241 may also be formed by connecting them each other, or two adjacent first abutting portions 241 may form an integrally formed structure by means of integral forming, and the side-by-side direction of the electrode assemblies 22 is consistent with the thickness direction B of the battery cell.

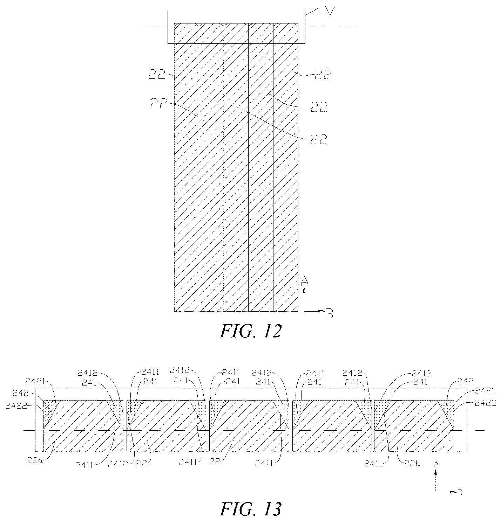

As shown in Figs. 12 and 13, Fig. 12 shows a schematic structural diagram in which more than three electrode assemblies 22 are comprised and two first abutting portions 241 are arranged between two adjacent electrode assemblies 22, and Fig. 13 shows an enlarged view of part IV in Fig. 12. In the battery cell 20 shown in Figs. 12 and 13, in the thickness direction B of the battery cell, the first abutting portions 241 on two sides of each electrode assembly 22 may be two separate structures. The two first abutting portions 241 may also be formed by connecting them each other, or may form an integrally formed structure by means of integral forming. In some embodiments, two adjacent first abutting portions 241 may be two separate structures, and each first abutting portion 241 is provided with a straight portion 223 of the electrode assembly 22, so as to support the part of the thinned portion 221 at the straight portion 223 when the electrode assembly 22 is expanded.

The first abutting portion 241 may be entirely located at the straight portion 223, or may have one part located at the straight portion 223 and the other part extending to the bent portion 224 in the circumferential direction of the electrode assembly 22.

Still referring to Fig. 13, in some embodiments, the first support member 24 comprises a second abutting portion 242. The second abutting portion 242 is arranged between the thinned portion 221 and the inner wall of the housing 21. The second abutting portion 242 is configured to abut against the inner wall of the housing 21 when the electrode assembly 22 is expanded, so as to support the thinned portion 221.

It should be noted that, the second abutting portion 242 abutting against the inner wall of the housing 21 may refer to that the second abutting portion 242 directly abuts against the inner wall of the housing 21, or may indirectly abut against the inner wall of the housing via an intermediate member.

The second abutting portion 242 is arranged between the thinned portion 221 and the inner wall of the housing 21 such that when the electrode assembly 22 is expanded, the second abutting portion 242 is supported between the thinned portion 221 and the inner wall of the housing 21, so that the thinned portion 221 can be in a stressed state with the support of the second abutting portion 242, reducing the risk of deposition of lithium ions and generation of side reaction products during charging and discharging caused by uneven polarization due to the fact that under conventional circumstances, the thinned portion 221 has a smaller thickness so that the thinned portion 221 is not in contact with the inner wall of the housing 21 and thus the thinned portion 221 cannot be stressed.

The second abutting portion 242 may be of a right-angled triangular prism structure. In the thickness direction B of the battery cell, the second abutting portion 242 has a second supporting face 2421 and a second abutting face 2422. The second abutting portion 242 is configured to cooperate with the thinned portion 221, and the second abutting face 2422 is configured to abut against the inner wall of the housing 21 in the direction in which the first support member 24 faces away from the thinned portion 221. The second supporting face 2421 is an inclined face. The inclination direction of the inclined face is consistent with that of the surface of the part of the electrode plate 1 of the corresponding electrode assembly 22 at the thinned portion 221, so that the second supporting face 2421 can be better attached to the thinned portion 221.

In the case where the battery cell 20 comprises a plurality of electrode assemblies 22, the plurality of electrode assemblies 22 comprise a first edge electrode assembly 22a and a second edge electrode assembly 22b located at two ends in the side-by-side direction of the electrode assemblies 22. A second abutting portion 242 is provided on the side where the part of the thinned portion 221 of the first edge electrode assembly 22a facing the inner wall of the housing 21 is located. The second abutting portion 242 is arranged corresponding to the part of the thinned portion 221 of the first edge electrode assembly 22a facing the inner wall of the housing 21, and the second abutting portion 242 supports the part of the thinned portion 221 of the first edge electrode assembly 22a facing the inner wall of the housing 21 when the electrode assembly 22 is expanded. A second abutting portion 242 is provided on the side where the part of the thinned portion 221 of the second edge electrode assembly 22b facing the inner wall of the housing 21 is located. The second abutting portion 242 is arranged corresponding to the part of the thinned portion 221 of the second edge electrode assembly 22b facing the inner wall of the housing 21, and the second abutting portion 242 supports the part of the thinned portion 221 of the second edge electrode assembly 22b facing the inner wall of the housing 21 when the electrode assembly 22 is expanded.

In some embodiments, one part of the second abutting portion 242 is located at the straight portion 223, and other part of the second abutting portion 242 extends at least to an outer periphery of one bent portion 224, so that the second abutting portion can support the straight portion 223 and at least one bent portion 224 of the first edge electrode assembly 22a when the electrode assembly 22 is expanded, and the second abutting portion 242 can support the straight portion 223 and the bent portion 224 of the second edge electrode assembly 22b when the electrode assembly 22 is expanded.

In some embodiments, the second abutting portion 242 may also be entirely arranged at the straight portion 223.

In some embodiments, the first support member 24 is arranged around the outer periphery of the thinned portion 221, such that when the electrode assembly 22 is expanded, the first support member 24 can support the thinned portion 221 at any position in the circumferential direction of the thinned portion 221, so that all the positions of the thinned portion 221 in the circumferential direction can be stressed, and the thinned portion 221 is uniformly polarized, reducing the risk of deposition of lithium ions and generation of side reaction products during charging and discharging.

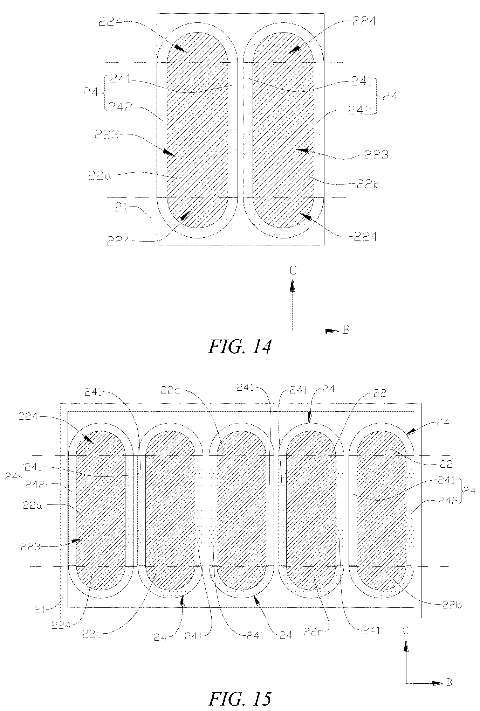

Referring to Fig. 14, in some embodiments, the battery cell 20 comprises two electrode assemblies 22,. In the side-by-side direction of the electrode assemblies 22 (the thickness direction B of the battery cell), the two electrode assemblies 22 are respectively a first edge electrode assembly 22a and a second edge electrode assembly 22b, and one first support member 24 is arranged around the outer periphery of the thinned portion 221 of each of the two electrode assemblies 22. The first support member 24 comprises a first abutting portion 241 and a second abutting portion 242. In the circumferential direction of the electrode assembly 22, the first abutting portion 241 and the second abutting portion 242 are connected to each other form a closed-loop first support member 24.

Referring to Fig. 15, in some embodiments, the battery cell 20 comprises three or more electrode assemblies 22, and each thinned portion 221 of each electrode assembly 22 is correspondingly provided with one first support member 24. In the side-by-side direction of the electrode assemblies 22 (the thickness direction B of the battery cell), the electrode assemblies 22 at two ends are respectively a first edge electrode assembly 22a and a second edge electrode assembly 22b, and the remaining electrode assemblies 22 are intermediate electrode assemblies 22c. Each thinned portion 221 of the first edge electrode assembly 22a, each thinned portion 221 of the second edge electrode assembly 22b, and each thinned portion 221 of the intermediate electrode assembly 22c are respectively provided with one first support member 24 around the outer circumference thereof. The first support member 24 arranged at each of the first edge electrode assembly 22a and the second edge electrode assembly 22b comprises a first abutting portion 241 and a second abutting portion 242. In the circumferential direction of the electrode assembly 22, the first abutting portion 241 and the second abutting portion 242 are connected to each other form a closed-loop first support member 24. The first support member 24 corresponding to the thinned portion 221 of the intermediate electrode assembly 22c comprises only the first abutting portion 241, and the first abutting portion 241 is arranged around the thinned portion 221 of the intermediate electrode assembly 22c.

In some embodiments, the battery cell 20 comprises a plurality of electrode assemblies 22, the first support member 24 may only comprise a first abutting portion 241, and the first abutting portion 241 is supported between the thinned portions 221 of two adjacent electrode assemblies 22.

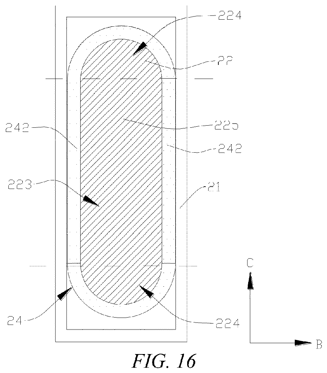

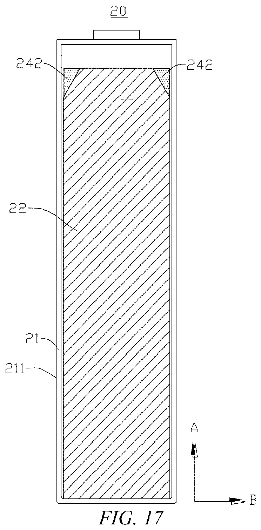

Referring to Figs. 16 and 17, in some embodiments, the battery cell 20 has only one electrode assembly 22. In the thickness direction B of the battery cell, second abutting portions 242 are provided on two sides of the electrode assembly 22, that is, one electrode assembly 22 is correspondingly provided with two second abutting portions 242, and the two second abutting portions 242 can respectively abut against the inner wall of the housing 21 on two sides of the thickness direction B of the battery cell, so as to support the thinned portion 221 when the electrode assembly 22 is expanded. The two second abutting portions 242 may be separate structures, or may be connected to each other or form an integrally formed structure by means of integral forming. In the case where the two second abutting portions 242 are connected to each other or are of an integrally formed structure, the two second abutting portions 242 extend in the circumferential direction of the electrode assembly 22, so that one part of the structure formed by the two second abutting portions 242 is arranged at the straight portion 223, and the other part is arranged around at least one bent portion 224. When one part of the structure formed by the two second abutting portions 242 is arranged at the straight portion 223, and the other part is arranged around two bent portions 224, the first support member 24 is arranged around the outer periphery of the thinned portion 221. Figs. 16 and 17 show that the first support member 24 comprising only the second abutting portion 242 is arranged around the thinned portion 221.

In some embodiments, regardless of whether there is one or more electrode assemblies 22 in the battery cell 20, the first support member 24 may only comprise a second abutting portion 242. In other words, when there is one electrode assembly 22, the first support member 24 only comprises a second abutting portion 242 arranged between the thinned portion 221 and the inner wall of the housing 21, and when there are a plurality of electrode assemblies 22, the first support member 24 only comprises a second abutting portion 242 arranged between the thinned portion 221 and the inner wall of the housing 21, and no first abutting portion 241 may be provided between two adjacent electrode assemblies 22.

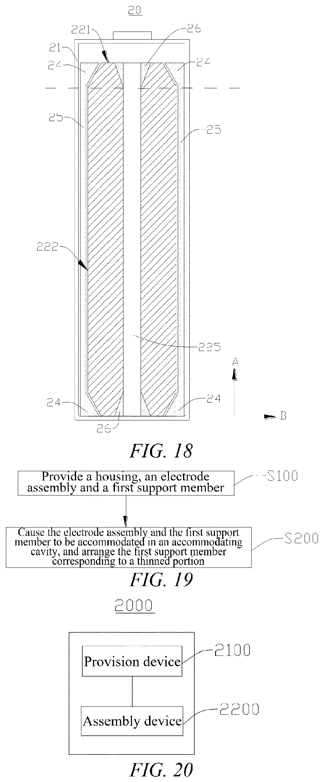

Referring to Fig. 18, in some embodiments, the battery cell 20 further comprises a second support member 25. The second support member 25 is arranged corresponding to the main body portion 222, and the second support member 25 is configured to support the main body portion 222 when the electrode assembly 22 is expanded. When the battery cell 20 is expanded, the second support member 25 supports the main body portion 222, so that the main body portion 222 is stressed as uniformly as possible, improving the polarization uniformity, and reducing the risk of deposition of lithium ions and generation of side reaction products during charging and discharging. The provision of the first support member 24 and the second support member 25 can alleviate the problems of lithium precipitation of the thinned portion 221 and uneven expansion force of the main body portion 222.

In the case where the second support member 25 is located between the main body portion 222 and the inner wall of the housing 21, when the electrode assembly 22 is expanded, the main body portion 222 and the inner wall of the housing 21 jointly press the second support member 25, and the second support member 25 supports the main body portion 222 so that the main body portion 222 is in a stressed state. In the case where the second support member 25 is located between the main body portions 222 of two adjacent electrode assemblies 22, when the electrode assemblies 22 are expanded, the main body portions 222 of the two adjacent electrode assemblies 22 jointly press the second support member 25, and the second support member 25 exerts reaction forces on the main body portions 222 to support the main body portions 222, so that the main body portions 222 are in a stressed state.

In some embodiments, in the first direction A, the first support member 24 and the second support member 25 are arranged apart from each other, or one end of the first support member 24 abuts against one end of the second support member 25.

In some embodiments, the second support member 25 is connected to one end of the first support member 24 in the first direction A. The first support member 24 is connected to the second support member 25 such that the first support member 24 and the second support member 25 can be mutually restrained, relative displacement will not occur, and the mounting stability of the first support member 24 and the second support member 25 are improved, so that when the electrode assembly 22 is expanded, the first support member 24 can stably support the thinned portion 221, and the second support member 25 can stably support the main body portion 222.

In the case where the battery cell 20 comprises only one electrode assembly 22, the first support member 24 arranged in the battery cell 20 only comprises a second abutting portion 242, and the second support member 25 is connected to one end of the second abutting portion 242.

In the case where the battery cell 20 comprises two electrode assemblies 22, the first support member 24 comprises a first abutting portion 241 and a second abutting portion 242, the second support member 25 may be connected to both the first abutting portion 241 and the second abutting portion 242, and one part of the second support member 25 is located between the main body portion 222 and the inner wall of the housing, and the other part is located between two adjacent electrode assemblies 22.

In the case where the battery cell 20 comprises three or more electrode assemblies 22, some of the first support members 24 may only comprise a second abutting portion 242, and some of the second support members 25 may comprise a first abutting portion 241 and a second abutting portion 242. Then, some of the second support members 25 may be connected to one end of a second abutting portion 242, and some of the second support members 25 may be connected to both a first abutting portion 241 and a second abutting portion 242.

In some embodiments, the surface of the first support member 24 facing away from the thinned portion 221 is flush with the surface of the second support member 25 facing away from the main body portion 222, such that when the surface of the second support member 25 facing away from the main body portion 222 is subjected to a pressing force in a direction facing the main body portion 222, the surface of the first support member 24 facing away from the thinned portion 221 is also subjected to a pressing force in a direction facing the thinned portion 221, so that the thinned portion 221 and the main body portion 222 are uniformly stressed.

In some embodiments, the second support member 25 and the first support member 24 being of an integrally formed structure facilitates manufacturing, and can also reduce the number of steps for assembling the battery cell 20, and the integrally formed structure of the first support member 24 and the second support member 25 also has a good structural strength. The integrally formed structure of the second support member 25 and the first support member 24 refers to a structure formed by the second support member 25 and the first support member 24 by means of integral forming such as casting or injection molding.

As shown in Fig. 18, in some embodiments, the two ends of the main body portion 222 in the first direction A are connected to thinned portions 221, and the two ends of the second support member 25 in the first direction A are connected to first support members 24.

In some embodiments, the battery cell 20 may only comprise a first support member 24, and no second support member 25 is provided. When only the first support member 24 is provided in the battery cell 20, the surface of the first support member 24 facing away from the thinned portion 221 protrudes from the surface of the main body portion 222 in the direction in which the first support member 24 faces away from the thinned portion 221. When the electrode assembly 22 is expanded, the expansion amount of the main body portion 222 is generally greater than the expansion amount of the thinned portion 221, so when the surface of the first support member 24 facing away from the thinned portion 221 protrudes from the surface of the main body portion 222 in the direction in which the first support member 24 faces away from the thinned portion 221, the protruding size can compensate for the difference in the expansion amount of the thinned portion 221 relative to the main body portion 222 during expansion, such that when the surface of the main body portion 222 is subjected to an abutting force, the surface of the first support member 24 facing away from the thinned portion 221 is subjected to an abutting force in the direction facing the thinned portion 221, so that the thinned portion 221 and the main body portion 222 are uniformly stressed.

Of course, when only the first support member 24 is provided in the battery cell 20, the surface of the first support member 24 facing away from the thinned portion 221 may be flush with the surface of the main body portion 222 in the direction in which the first support member 24 faces away from the thinned portion 221. When the surface of the first support member 24 facing away from the thinned portion 221 is flush with the surface of the main body portion 222, it is convenient to complete assembly of the battery cell 20.

Still referring to Fig. 18, in some embodiments, the electrode assembly 22 has a central hole 225; and the battery cell 20 further comprises a third support member 26. The third support member 26 is inserted into the central hole 225 and arranged corresponding to the thinned portion 221.

The materials of the first support member 24, the second support member 25 and the third support member 26 may be the same or different. For example, the first support member 24, the second support member 25 and the third support member 26 may be selected from rubber, foam, aerogel and other flexible materials.

The combination of the first support member 24 and the second support member 25 can realize the function of enhancing the safety performance of the battery 100. For example, the first support member 24 is made of foam, and the second support member 25 is made of heat-insulating aerogel, so that the second support member 25 blocks the heat transfer between the plurality of electrode assemblies 22 at the main body portion 222, so as to delay the spread time of thermal runaway and reduce the severity of the runaway.

For a cylindrical electrode assembly 22, the positive electrode plate, the negative electrode plate and the separator that need to be stacked are wound around a winding needle, so the formed electrode assembly 22 has a central hole 225. When the electrode assembly 22 is expanded, a part of the thinned portion 221 will have a tendency to expand toward the center of the central hole 225, the third support member 26 is inserted into the central hole 225 and is arranged corresponding to the thinned portion 221, such that when the electrode assembly 22 is expanded, the part of the thinned portion 221 expanding toward the center of the central hole 225 presses the third support member 26, and the thinned portion 221 is supported with the reaction force of the third support member 26, so that the thinned portion 221 expanding toward the center of the central hole 225 can be in a stressed state, reducing the risk of deposition of lithium ions and generation of side reaction products during charging and discharging caused by uneven polarization due to the smaller thickness of the electrode plate 1 at the thinned portion 221 on the outer periphery of the central hole 225 and the presence of the central hole 225 so that the thinned portion is not in contact with the central hole and thus cannot be stressed. The structure of the third support member 26 may refer to the structure of the first support member 24 or the combined structure of the first support member 24 and the second support member 25.

In some embodiments, the electrode assembly 22 may be a laminated electrode assembly. At least one end of the laminated electrode assembly in the height direction is provided with a thinned portion, and a first support member 24 is arranged corresponding to the thinned portion of the laminated electrode assembly.

As shown in Fig. 19, an embodiment of the present application also provides a method for manufacturing a battery cell 20, the manufacturing method comprises the following steps.

In step S100, a housing 21, an electrode assembly 22 and a first support member 24 are provided. The housing 21 is provided with an accommodating cavity 212. The electrode assembly 22 comprises a main body portion 222 and a thinned portion 221. At least one end of the main body portion 222 in a first direction A is connected to the thinned portion 221, and a part of an electrode plate 1 of the electrode assembly 22 at the main body portion 222 has a thickness greater than that of a part of the electrode plate 1 of the electrode assembly 22 at the thinned portion 221.

In step S200, the electrode assembly 22 and the first support member 24 are caused to be accommodated in the accommodating cavity 212, and the first support member 24 is arranged corresponding to the thinned portion 221, such that the first support member 24 supports the thinned portion 221 when the electrode assembly 22 is expanded.

The first support member 24 is arranged in the housing 21 and corresponding to the thinned portion 221 such that when the electrode assembly 22 is expanded, the first support member 24 supports the thinned portion 221, so that the thinned portion 221 can be in a stressed state with the support of the first abutting portion 241, alleviating the deposition of lithium ions and therefore lithium precipitation and the generation of side reaction products during charging and discharging caused by uneven polarization due to the fact that under conventional circumstances, the electrode plate has a smaller thickness at the thinned portion 221 so that the thinned portion 221 is not in contact with the inner wall of the housing 21 or adjacent thinned portions 221 are not in contact with each other and thus the thinned portion(s) 221 cannot be stressed.

Referring to Fig. 20, an embodiment of the present application also provides an apparatus 2000 for manufacturing a battery cell. The apparatus 2000 for manufacturing a battery cell comprises a provision device 2100 and an assembly device 2200. The provision device 2100 is configured to provide a housing 21, an electrode assembly 22 and a first support member 24. The housing 21 is provided with an accommodating cavity 212. The electrode assembly 22 comprises a main body portion 222 and a thinned portion 221. At least one end of the main body portion 222 in a first direction A is connected to the thinned portion 221, and a part of an electrode plate 1 of the electrode assembly 22 at the main body portion 222 has a thickness greater than that of a part of the electrode plate 1 of the electrode assembly 22 at the thinned portion 221. The assembly device 2200 is configured to cause the electrode assembly 22 and the first support member 24 to be accommodated in the accommodating cavity 212, and to arrange the first support member 24 corresponding to the thinned portion 221, such that the first support member 24 supports the thinned portion 221 when the electrode assembly 22 is expanded.

The assembly device 2200 can arrange the first support member 24 in the housing 21 and corresponding to the thinned portion 221 such that when the electrode assembly 22 is expanded, the first support member 24 supports the thinned portion 221, so that the thinned portion 221 can be in a stressed state with the support of the first abutting portion 241, alleviating the deposition of lithium ions and therefore lithium precipitation and the generation of side reaction products during charging and discharging caused by uneven polarization due to the fact that under conventional circumstances, the electrode plate has a smaller thickness at the thinned portion 221 so that the thinned portion 221 is not in contact with the inner wall of the housing 21 or adjacent thinned portions 221 are not in contact with each other and thus the thinned portion(s) 221 cannot be stressed.

The foregoing descriptions are merely preferred embodiments of the present application, but are not intended to limit the present application. For those skilled in the art, the present application may have various modifications and variations. Any modifications, equivalent substitutions, improvements, and the like made within the spirit and principle of the present application should be included within the protection scope of the present application.

## Claims

1. A battery cell, comprising:
a housing provided with an accommodating cavity;
an electrode assembly accommodated in the accommodating cavity, the electrode assembly comprising a main body portion and a thinned portion, wherein at least one end of the main body portion in a first direction is connected to the thinned portion, and a part of an electrode plate of the electrode assembly at the main body portion has a thickness greater than that of a part of the electrode plate of the electrode assembly at the thinned portion; and and
a first support member arranged corresponding to the thinned portion, the first support member being configured to support the thinned portion when the electrode assembly is expanded.

2. The battery cell according to claim 1, comprising a plurality of electrode assemblies, wherein the plurality of electrode assemblies are arranged side-by-side in a thickness direction of the battery cell; and
the first support member comprises at least one first abutting portion, and at least one first abutting portion is arranged between the thinned portions of two adjacent electrode assemblies.

3. The battery cell according to claim 2, wherein two first abutting portions are arranged between the thinned portions of two adjacent electrode assemblies, and the two first abutting portions are configured to abut against each other in the thickness direction of the battery cell when the electrode assemblies are expanded, so as to support the thinned portions.

4. The battery cell according to any one of claims 1-3, wherein the first support member comprises a second abutting portion arranged between the thinned portion and an inner wall of the housing, the second abutting portion being configured to abut against the inner wall of the housing when the electrode assembly is expanded, so as to support the thinned portion.

5. The battery cell according to any one of claims 1-4, wherein the part of the electrode plate at the thinned portion has a thickness gradually decreasing in a direction in which the thinned portion faces away from the main body portion.

6. The battery cell according to claim 5, wherein a part of the first support member corresponding to the thinned portion has a thickness gradually increasing in the direction in which the thinned portion faces away from the main body portion.

7. The battery cell according to any one of claims 1-6, further comprising a second support member arranged corresponding to the main body portion, the second support member being configured to support the main body portion when the electrode assembly is expanded.

8. The battery cell according to claim 7, wherein the second support member is connected to one end of the first support member in the first direction.

9. The battery cell according to claim 7 or 8, wherein the second support member and the first support member are of an integrally formed structure.

10. The battery cell according to any one of claims 7-9, wherein a surface of the first support member facing away from the thinned portion is flush with a surface of the second support member facing away from the main body portion.

11. The battery cell according to any one of claims 1-6, wherein in a direction in which the first support member faces away from the thinned portion, a surface of the first support member facing away from the thinned portion protrudes from a surface of the main body portion or the surface of the first support member facing away from the thinned portion is flush with the surface of the main body portion.

12. The battery cell according to any one of claims 1-11, wherein the electrode assembly has a central hole; and
the battery cell further comprises a third support member which is inserted into the central hole and arranged corresponding to the thinned portion.

13. The battery cell according to any one of claims 1-12, wherein the first support member is arranged around an outer periphery of the thinned portion.

14. The battery cell according to any one of claims 1-13, wherein the first support member is fixed to the thinned portion.

15. The battery cell according to any one of claims 1-14, wherein the electrode plate comprises a current collector and an active material layer arranged on a surface of the current collector, and the active material layer of the electrode plate has a greater thickness at the main body portion than at the thinned portion.

16. A battery, comprising:
a case; and
a battery cell of any one of claims 1-15, wherein the battery cell is accommodated in the case.

17. A power consuming apparatus, comprising a battery cell of any one of claims 1-15.

18. A method for manufacturing a battery cell, the method comprising:
providing a housing, an electrode assembly and a first support member, wherein the housing is provided with an accommodating cavity, and the electrode assembly comprises a main body portion and a thinned portion, wherein at least one end of the main body portion in a first direction is connected to the thinned portion, and a part of an electrode plate of the electrode assembly at the main body portion has a thickness greater than that of a part of the electrode plate of the electrode assembly at the thinned portion; and
causing the electrode assembly and the first support member to be accommodated in the accommodating cavity, and arranging the first support member corresponding to the thinned portion, such that the first support member supports the thinned portion when the electrode assembly is expanded.

19. An apparatus for manufacturing a battery cell, the apparatus comprising:
a provision device configured to provide a housing, an electrode assembly and a first support member, wherein the housing is provided with an accommodating cavity, and the electrode assembly comprises a main body portion and a thinned portion, wherein at least one end of the main body portion in a first direction is connected to the thinned portion, and a part of an electrode plate of the electrode assembly at the main body portion has a thickness greater than that of a part of the electrode plate of the electrode assembly at the thinned portion; and
an assembly device configured to cause the electrode assembly and the first support member to be accommodated in the accommodating cavity, and to arrange the first support member corresponding to the thinned portion, such that the first support member supports the thinned portion when the electrode assembly is expanded.
